# EUROPEAN PATENT SPECIFICATION

(11) **EP 3 238 485 B1**
(45) Date of publication and mention of the grant of the patent: **25.03.2020**
(21) Application number: 15807742.0
(22) Date of filing: 20.11.2015
(51) Int. Cl.: H04W 48/16, H04W 48/08

(54) **VOLUNTARY ACCESS BARRING**
FREIWILLIGE ZUGANGSSPERRE
INTERDICTION D'ACCÈS VOLONTAIRE

(30) Priority: 23.12.2014 US 201414581613
(43) Date of publication of application: 01.11.2017
(73) Proprietor: Intel Corporation, Santa Clara, CA 95054 (US)
(72) Inventor: ZHU, Jing, Portland, Oregon 97229 (US); RASHID, Mohammad Mamunur, Hillsboro, Oregon 97124 (US)
(74) Representative: Lang, Johannes
(86) International application number: PCT/US2015/061817
(87) International publication number: WO 2016/105734

(56) References cited:
- EP-A2- 2 642 794
- WO-A1-2013/141600
- GB-A- 2 495 271
- US-A1- 2014 140 213
- "3rd Generation Partnership Project; Technical Specification Group Services and System Aspects; Study on Application-Specific Congestion Control for Data Communication (Release 13)", 3GPP STANDARD; 3GPP TR 22.806, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V13.1.0, 26 September 2014 (2014-09-26), pages 1-40, XP050925958, [retrieved on 2014-09-26] cited in the application
- "3rd Generation Partnership Project; Technical Specification Group Services and System Aspects; Service accessibility (Release 13)", 3GPP STANDARD; 3GPP TS 22.011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V13.1.0, 26 September 2014 (2014-09-26), pages 1-27, XP050925944, [retrieved on 2014-09-26]

## Description

### TECHNICAL FIELD

Embodiments described herein generally relate to the field of wireless communications and, more particularly, to methods and apparatus for voluntarily barring network access for an application class in a wireless communication system.

### BACKGROUND OF THE INVENTION.

Wireless telecommunications networks are being used to provide an increasing range of services to User Equipment (UEs). A wide variety of applications are available that can be downloaded and installed on UEs. However, not all applications may be considered equally important.

For example, a disaster message board (DMB) service has been introduced that uses packet based communications to allow users to confirm the safety of friends and family during an event such as a natural disaster. Previously, in the event of a large scale event, networks have become severely congested impacting on all uses of the network equally, with network capacity reserved for a small subset of priority users (such as emergency responders).

To provide more controllable congestion management for wireless networks, Application specific Congestion control for Data Communication (ACDC) has been proposed. A proposal for ACDC has been outlined in 3GPP TSG SA1 for R13, and the following requirements have been drafted in document 3GPP TR22.806:
The UE shall be able to be pre-configured with ACDC allowed application list based on operator's policy, subject to regional regulations.

The network shall be able to configure ACDC allowed application list dynamically in the UE based on operator's policy, subject to regional regulations.

The network shall be able to activate/deactivate ACDC control for UE-initiated applications in a specific area dynamically based on operator's policy, subject to regional regulations
When the ACDC control is activated, the UEs, irrespective of in idle mode or in connected mode, shall allow/restrict UE-initiated applications based on ACDC allowed application lists.

Through use of the proposed ACDC mechanisms, the network is able to actively control which application services are allowed access to the network resources, allowing sufficient resources to be maintained for priority services such as the DMB service. For example, by barring applications that stream video from the network to maintain sufficient available resources.

US2014/140213 describes service policy implementation for an end-user device having a control application or a proxy agent for routing an application traffic flow.

3rd Generation Partnership Project; Technical Specification Group Services and System Aspects; Study on Application-Specific Congestion Control for Data Communication (Release 13)", 3GPP STANDARD; 3GPP TR 22.806, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. SA WG1, no. V13.1.0, 26 September 2014 (2014-09-26), pages 1-40, XP050925958, is a technical report providing a study on Application specific Congestion control for Data Communication (ACDC).

### SUMMARY OF THE INVENTION

The scope of protection is defind according to the independent claims. Additional advantageous embodiments are disclosed according to the appended dependent claims.

### BRIEF DESCRIPTION OF THE DRAWING.

Aspects, features and advantages of embodiments of the present invention will become apparent from the following description of the invention in reference to the appended drawings in which like numerals denote like elements and in which:
Fig. 1 is block diagram of an example wireless network according to various embodiments;
Fig. 2 is a block diagram showing an exemplary method in a user equipment in accordance with various embodiments;
Fig. 3 illustrates a state machine of a user equipment in accordance with various embodiments;
Fig. 4 is a block diagram showing an exemplary method in a network element in accordance with various embodiments;
Fig. 5 is a block diagram showing an example system in accordance with various embodiments; and
Fig. 6 is a block diagram showing an example wireless apparatus configured for communicating in a wireless network according to one or more of the inventive methods disclosed herein.

### DETAILED DESCRIPTION OF EMBODIMENTS

Illustrative embodiments of the present disclosure include, but are not limited to, methods, systems, and apparatuses for voluntarily barring network access for an application class in a wireless communication system.

Various aspects of the illustrative embodiments will be described using terms commonly employed by those skilled in the art to convey the substance of their work to others skilled in the art. However, it will be apparent to those skilled in the art that some alternate embodiments may be practiced using with portions of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order to not obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in one embodiment" is used repeatedly. The phrase generally does not refer to the same embodiment; however, it may. The terms "comprising," "having," and "including" are synonymous, unless the context dictates otherwise. The phrase "A/B" means "A or B". The phrase "A and/or B" means "(A), (B), or (A and B)". The phrase "at least one of A, B and C" means "(A), (B), (C), (A and B), (A and C), (B and C) or (A, B and C)". The phrase "(A) B" means "(B) or (A B)", that is, A is optional.

Although specific embodiments have been illustrated and described herein, it will be appreciated by those of ordinary skill in the art that a wide variety of alternate implementations may be substituted for the specific embodiments shown and described, without departing from the scope of the embodiments of the present disclosure. Therefore, it is manifestly intended that the embodiments of the present disclosure be limited only by the claims and the equivalents thereof.

As used herein, the term "module" may refer to, be part of, or include an Application Specific Integrated Circuit (ASIC), an electronic circuit, a processor (shared, dedicated, or group) and/or memory (shared, dedicated, or group) that execute one or more software or firmware instructions and/or programs, a combinational logic circuit, and/or other suitable components that provide the described functionality.

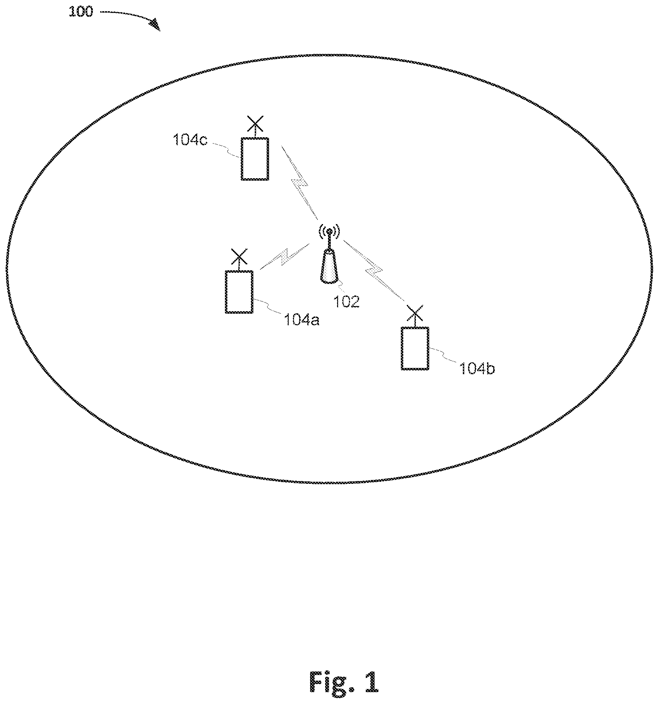

Figure 1 schematically illustrates a wireless communication network 100 in accordance with various embodiments. Wireless communication network 100 (hereinafter "network 100") may be an access network of a 3rd Generation Partnership Project (3GPP) long-term evolution (LTE) or long-term evolution-advanced (LTE-A) network such as an evolved universal mobile telecommunication system (UMTS) terrestrial radio access network (E-UTRAN).

The network 100 may include a base station, e.g., evolved node base station (eNB) 102, configured to wirelessly communicate with one or more mobile device(s) or terminal(s), e.g., user equipment (UE) 104. In various embodiments, the eNB 102 may be a fixed station (e.g., a fixed node) or a mobile station/node.

Each UE 104 may have a number of different applications, such as applications providing access to social media, video/audio streaming, instant messaging and/or World Wide Web access. In the case that the cell associated with the eNB 102 becomes congested, application specific congestion control for data communications (ACDC) mechanisms may be activated to bar certain applications from using network resources. For example, high bandwidth services such as video upload/download may be limited first. Operation of allowed applications, or application classes, will then continue with a greater proportion of the network resources available for those services.

In some circumstances, there may exist too many users with the same ACDC allowed application class, e.g. VoLTE, that the radio access network (RAN) may still experience RACH congestion. According to some embodiments, in this situation, a UE may voluntarily bar itself for a period of time based on a policy defined by the operator. This allows the network to mitigate potential congestion without further limiting the application classes allowed via ACDC.

According to some embodiments, the user may be offered incentives by the operator for voluntarily barring itself from the network for allowed application classes. For example, the user may be given call minutes, data bits, or cash rebates, etc. in return for voluntarily barring themselves.

In various embodiments, the UE 104 and/or the eNB 102, 106 may include a plurality of antennas to implement a multiple-input-multiple-output (MIMO) transmission system, which may operate in a variety of MIMO modes, including single-user MIMO (SU-MIMO), multi-user MIMO (MU-MIMO), close loop MIMO, open loop MIMO or variations of smart antenna processing.

While embodiments of the present invention are described with reference to an LTE network, some embodiments may be used with other types of wireless access networks.

The following inventive embodiments may be used in a variety of applications including transmitters and receivers of a radio system, although the present invention is not limited in this respect. Radio systems specifically included within the scope of the present invention include, but are not limited to, network interface cards (NICs), network adaptors, fixed or mobile client devices, relays, base stations, femtocells, gateways, bridges, hubs, routers, access points, or other network devices. Further, the radio systems within the scope of the invention may be implemented in cellular radiotelephone systems, satellite systems, two-way radio systems as well as computing devices including such radio systems including personal computers (PCs), tablets and related peripherals, personal digital assistants (PDAs), personal computing accessories, hand-held communication devices and all systems which may be related in nature and to which the principles of the inventive embodiments could be suitably applied.

According to embodiments, based on user's input and operator's policy, a UE may voluntarily stop network access for a specific application even if it is allowed by the ACDC rules. In return, the user may be given back incentives, e.g. extra call minutes or cash rebates.

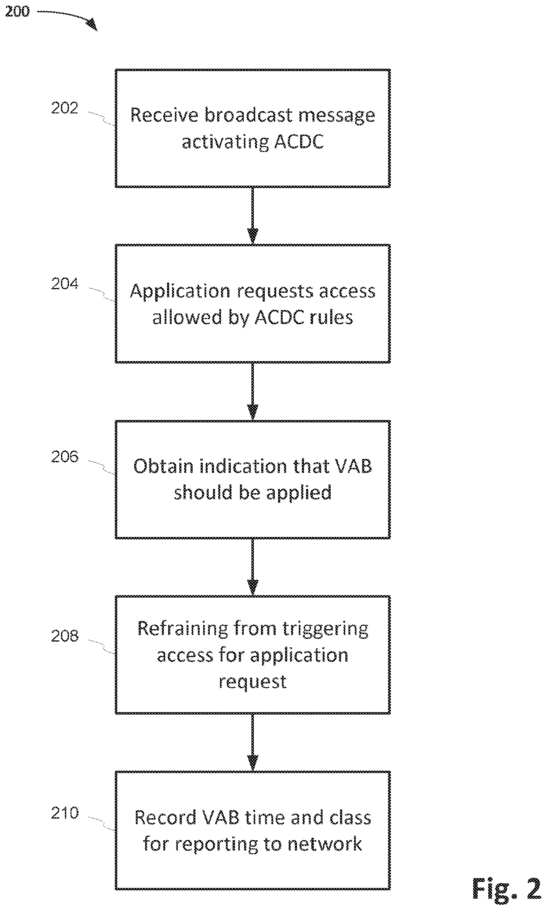

Figure 2 illustrates a method 200 performed at a UE according to some embodiments. According to the method 200 of Figure 2, a UE receives a broadcast message from the network activating ACDC and identifying allowed application classes. In particular, the broadcast message will indicate that VAB is enabled and provide a VAB timer value to be used by the VAB mechanism. For example, the eNB 102 may send a broadcast message (e.g. SIB2) to activate application-specific access class barring including the following per-class configuration parameters (AAC):
VAB enabled: indicating if the voluntary access barring is enabled or not; and
VAB timer: indicating the voluntary barring time value in seconds.

Subsequently, an application triggers a network access 204, if the access is allowed by ACDC and VAB is enabled (based on the broadcast message from eNB), an indication may be provided to a user requesting whether voluntary barring should be applied. Otherwise, it will follow the existing ACDC based access procedure, or the normal access procedure if ACDC is not activated.

The indication provided to the user may take the form of a message asking if they wish to voluntarily stop using the application for a period of time set by the VAB timer. The message may also notify the user about any available incentives based on the operator's policy. If the user replies 'yes', the UE refrains from triggering the network access for the application request 208.

Once VAB has been activated for a particular application, the UE will not trigger any further access for the application until a corresponding VAB timer expires.

During periods when VAB is active, the UE maintains a per-class counter to measure the total VAB time for each application access class. This information may then be reported to the Mobility Management Entity (MME) via NAS messages, or to the ACDCF via the S20 reference point after connecting to the network. The report may the following information:
ACDC Class Identifier (ACI): to uniquely identify each application access class (also called application access class type)
Total VAB time: to indicate the total VAB time for the application identified by ACI since the last reporting

Promised incentives may then be allocated to the user, e.g. free call minutes, free data bits, or cash rebates, etc. based on the reported VAB time.

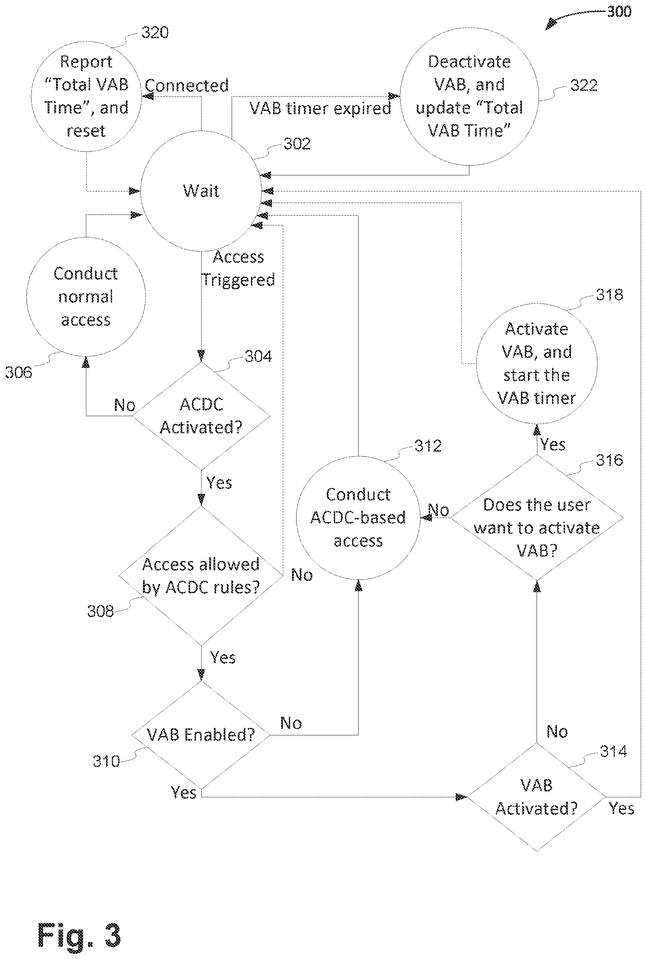

Figure 3 illustrates a state machine of a VAB mechanism. Initially, the UE is in the wait state 302 when a network access is triggered by an application. It is then determined whether ACDC has been activated by the network 304. If ACDC has not been activated, a normal network access is performed 306, and the UE returns to wait state 302.

If ACDC has been activated, a determination is then made as to whether the access is allowed under the ACDC rules currently being applied 308. If not, no access is allowed and the UE returns to the wait state 302. If the access is determined to be allowed, a further determination is made to determine if VAB is enabled 310. If VAB is not enabled, ACDC-based network access is performed 312 and then the UE returns to the wait state 302.

If it is determined that VAB is enabled, it is determined whether VAB is currently activated for the application class requesting access 314. If VAB is currently activated then network access for the application will be blocked and the UE returns to the wait state 302.

If VAB is not activated, the user will be provided with an option of whether to activate VAB for the application class or not 316. If the user decides not to activate VAB for the application class, network access for the application will be conducted based on normal ACDC rules 312 and the UE will then return to the wait state 302. However, if the user indicates that VAB should be activated, a VAB timer is started for the application class 318, and then the application access is blocked and the UE returns to the wait state 302.

While the UE is in the wait state 302, it will continue monitoring VAB timers that have been started for one or more application classes. If a timer is determined to have expired, the UE will deactivate VAB for the associated application class and update the "Total VAB Time" 322 associated with that application class. The UE will then return to the wait state 322.

At some point, the UE will connect to the network and "Total VAB Time" for each application class will then be reported to the network 320 and the timers reset.

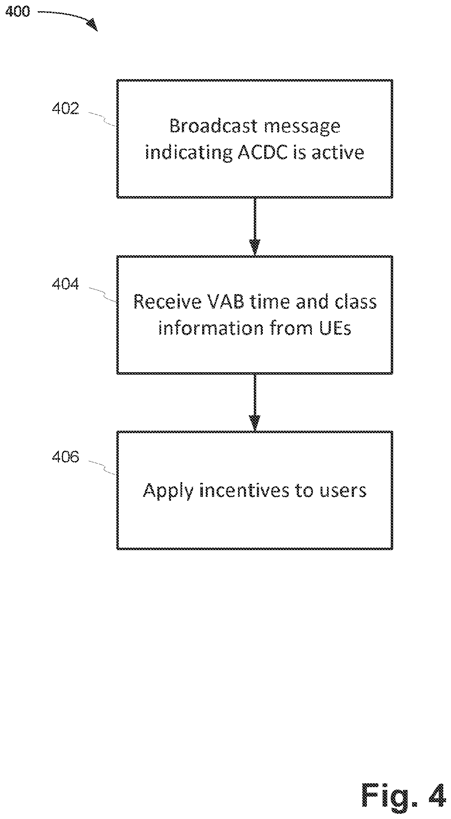

Figure 4 illustrates a method 400 performed at a network element, such as an eNB,in accordance with some embodiments. According to the method 400 of Figure 4, an eNB transmits a broadcast message 402 from indicating to UEs associated with the eNB that ACDC has been activated and identifying allowed application classes. In particular, the broadcast message will indicate that VAB is enabled and provide a VAB timer value. For example, the eNB 102 may send a broadcast message (e.g. SIB2) to activate application-specific access class barring including the following per-class configuration parameters (AAC):
VAB enabled: indicating if the voluntary access barring is enabled or not; and
VAB timer: indicating the voluntary barring time value in seconds.

Subsequently, the eNB will receive messages 404 from individual UEs informing the network of VAB time for each application class accumulated for that UE. Incentives can then be applied 406 to the relevant user's accounts based on the obtained VAB time and application class information associated with that user.

While the method of Figure 4 has been described as being performed in an eNB, it will be understood that the method could be performed in other network elements, for example a mobility management element, an access network discovery and selection function, or a voluntary access barring server.

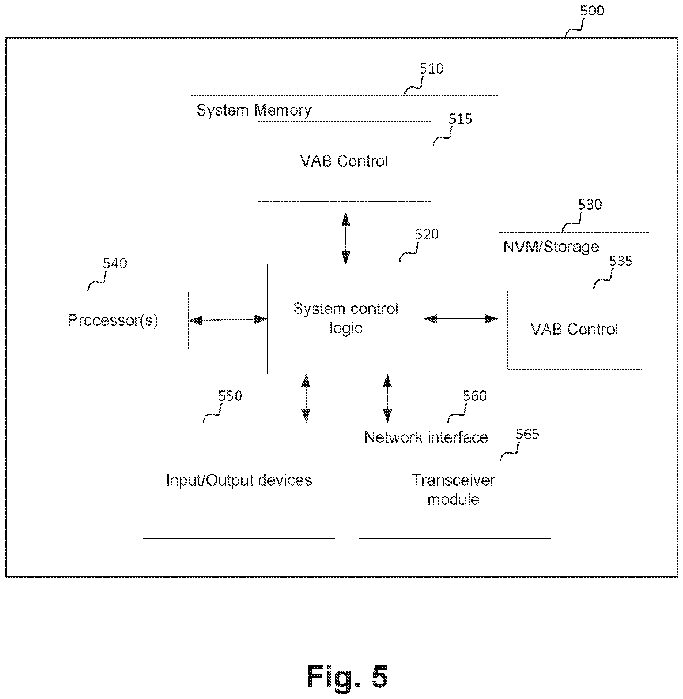

The eNB 102 and UEs 104 described herein may be implemented into a system using any suitable hardware and/or software to configure as desired. Figure 5 illustrates, for one embodiment, an example system 500 comprising one or more processor(s) 540, system control logic 520 coupled with at least one of the processor(s) 540, system memory 510 coupled with system control logic 520, non-volatile memory (NVM)/storage 530 coupled with system control logic 520, and a network interface 560 coupled with system control logic 520. The system control logic 520 may also be coupled to Input/Output devices 550.

Processor(s) 540 may include one or more single-core or multi-core processors. Processor(s) 540 may include any combination of general-purpose processors and dedicated processors (e.g., graphics processors, application processors, baseband processors, etc.). Processors 540 may be operable to carry out the above described methods, using suitable instructions or programs (i.e. operate via use of processor, or other logic, instructions). The instructions may be stored in system memory 510, as VAB control system memory portion 515, or additionally or alternatively may be stored in (NVM)/storage 530, as VAB control NVM instruction portion 535.

Processors(s) 540 may be configured to execute the embodiments of Figures 2-4 in accordance with various embodiments. In an embodiment in which the system 500 implements eNB 102, processor(s) 540 may be configured to perform the method 400 of Figure 4.

System control logic 520 for one embodiment may include any suitable interface controllers to provide for any suitable interface to at least one of the processor(s) 540 and/or to any suitable device or component in communication with system control logic 520.

System control logic 520 for one embodiment may include one or more memory controller(s) (not shown) to provide an interface to system memory 510. System memory 510 may be used to load and store data and/or instructions, for example, for system 500. System memory 510 for one embodiment may include any suitable volatile memory, such as suitable dynamic random access memory (DRAM), for example.

NVM/storage 530 may include one or more tangible, non-transitory computer-readable media used to store data and/or instructions, for example. NVM/storage 530 may include any suitable non-volatile memory, such as flash memory, for example, and/or may include any suitable non-volatile storage device(s), such as one or more hard disk drive(s) (HDD(s)), one or more compact disk (CD) drive(s), and/or one or more digital versatile disk (DVD) drive(s), for example.

The NVM/storage 530 may include a storage resource physically part of a device on which the system 500 is installed or it may be accessible by, but not necessarily a part of, the device. For example, the NVM/storage 530 may be accessed over a network via the network interface 560.

System memory 510 and NVM/storage 530 may respectively include, in particular, temporal and persistent copies of, for example, the VAB control instructions portions 515 and 535, respectively. Instructions portions 515 and 535 may include instructions that when executed by at least one of the processor(s) 540 result in the system 500 implementing method 300 or the method(s) of any other embodiment, as described herein. In some embodiments, instruction portions 515 and 535, or hardware, firmware, and/or software components thereof, may additionally/alternatively be located in the system control logic 520, the network interface 560, and/or the processor(s) 540.

Network interface 560 may have a transceiver module 565 to provide a radio interface for system 500 to communicate over one or more network(s) (e.g. wireless communication network) and/or with any other suitable device. In various embodiments, the transceiver 565 may be integrated with other components of system 500. For example, the transceiver 565 may include a processor of the processor(s) 540, memory of the system memory 510, and NVM/Storage of NVM/Storage 530. Network interface 560 may include any suitable hardware and/or firmware. Network interface 560 may be operatively coupled to a plurality of antennas to provide a multiple input, multiple output radio interface. Network interface 560 for one embodiment may include, for example, a network adapter, a wireless network adapter, a telephone modem, and/or a wireless modem.

For one embodiment, at least one of the processor(s) 540 may be packaged together with logic for one or more controller(s) of system control logic 520. For one embodiment, at least one of the processor(s) 540 may be packaged together with logic for one or more controllers of system control logic 520 to form a System in Package (SiP). For one embodiment, at least one of the processor(s) 540 may be integrated on the same die with logic for one or more controller(s) of system control logic 520. For one embodiment, at least one of the processor(s) 540 may be integrated on the same die with logic for one or more controller(s) of system control logic 520 to form a System on Chip (SoC).

In various embodiments, the I/O devices 550 may include user interfaces designed to enable user interaction with the system 500, peripheral component interfaces designed to enable peripheral component interaction with the system 500, and/or sensors designed to determine environmental conditions and/or location information related to the system 500.

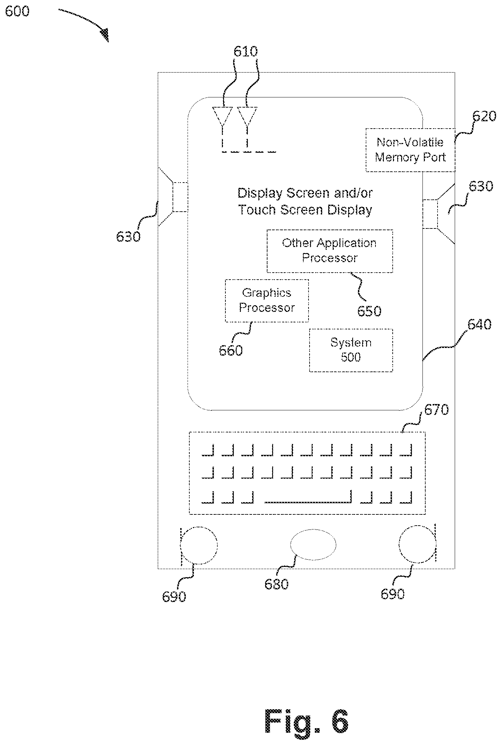

Figure 6 shows an embodiment in which the system 500 implements a UE 104 in the specific form of a mobile device 600.

In various embodiments, user interfaces could include, but are not limited to, a display 640 (e.g., a liquid crystal display, a touch screen display, etc.), a speaker 630, a microphone 690, one or more cameras 680 (e.g., a still camera and/or a video camera), a flashlight (e.g., a light emitting diode flash), and a keyboard 670.

In various embodiments, the peripheral component interfaces may include, but are not limited to, a non-volatile memory port, an audio jack, and a power supply interface.

In various embodiments, the sensors may include, but are not limited to, a gyro sensor, an accelerometer, a proximity sensor, an ambient light sensor, and a positioning unit. The positioning unit may also be part of, or interact with, the network interface 560 to communicate with components of a positioning network, e.g., a global positioning system (GPS) satellite.

In various embodiments, the system 500 may be a mobile computing device such as, but not limited to, a laptop computing device, a tablet computing device, a netbook, a mobile phone, etc. In various embodiments, system 500 may have more or less components, and/or different architectures.

In embodiments, the implemented wireless network may be a 3rd Generation Partnership Project's long term evolution (LTE) advanced wireless communication standard, which may include, but is not limited to releases 8, 9, 10, 11 and 12, or later, of the 3GPP's LTE-A standards.

Although certain embodiments have been illustrated and described herein for purposes of description, a wide variety of alternate embodiments or implementations calculated to achieve the same purposes may be substituted for the embodiments shown and described without departing from the scope of the present disclosure. Therefore, it is manifestly intended that embodiments described herein be limited only by the claims.

## Claims

1. A user equipment (104), UE, for use in a wireless communication system (100), the user equipment (104) comprising:
a communication module (565) configured to obtain an indication of application specific congestion control for data communication, ACDC, activation, the indication of ACDC activation including:
an indication of at least one allowed application class; and **characterized in that** the indication of ACDC activation further including:
an indication that voluntary access barring, VAB, is enabled in the wireless communication system (100);
and the user equipment (104) further comprising a control logic (535) configured to:
in response to receiving the indication that VAB is enabled, voluntarily bar access based on an indication from a user of the UE for an application requesting network access, wherein the application is associated with an allowed application class.

2. The user equipment (104) of claim 1, wherein the communication module (565) is further configured to obtain a VAB timer value that specifies a length of time for a voluntary access bar to be active; and
wherein the control logic (535) is configured to deactivate voluntary access barring for an application class dependent on expiration of a timer based on the VAB timer value.

3. The user equipment (104) of claim 1, wherein the control logic (535) is further configured to record a total time for which access has been voluntarily barred associated with each application class;
wherein the communication module (565) is further configured to communicate the total time for which access has been voluntarily barred associated with each application class to a network element in the core network that is designated to receive such information; and optionally
wherein the network element comprises one of an eNB (102), a mobility management element, an access network discovery and selection function, or a voluntary access barring server.

4. The user equipment (104) of claim 1, wherein the control logic (535) is further configured to obtain an indication from a user of the UE (104) that voluntary access barring should be applied for the application associated with an allowed application class; and
wherein the control logic (535) is further configured to indicate to a user one or more incentives available in return for apply voluntary access baring for the application associated with an allowed application class.

5. The user equipment (104) of any of claims 1 to 4 further comprising one or more of: a screen, a speaker, a touchscreen, a keyboard, an antenna array including a plurality of antennas, a graphics processor, or an application processor.

6. A method (200) effected by a UE of mitigating congestion in a wireless communication network, the method comprising:
in response to an application requesting (204) a network access, determining that application specific congestion control for data communication, ACDC, is activated and determining at least one allowed application class; and **characterized by**:
receiving an indication that voluntary access barring, VAB, is enabled in the network
in response to receiving the indication that VAB is enabled, voluntarily barring access (208) based on an indication from a user for an application requesting network access wherein the application is associated with an allowed application class.

7. The method (200) of claim 6, further comprising:
recording (210) a total time for which access has been voluntarily barred for applications associated with the allowed application class.

8. The method (200) of claim 7, further comprising communicating a total time for which access has been voluntarily barred associated with each application class to a network element in the core network that is designated to receive such information; and
wherein the network element comprises one of an eNB (102), a mobility management element, an access network discovery and selection function, or a voluntary access barring server.

9. A network element for use in a wireless communication system (100), the network element comprising:
a communication module configured to transmit a broadcast message indicating that application specific congestion control for data communication, ACDC, is active for communications with the network element the broadcast message including an indication of at least one allowed application class; and **characterized in that**
the broadcast message further comprises an indication that voluntary access barring is enabled; and wherein the communication module is further configured to receive an indication of total voluntary barring time for at least one allowed application class from a user equipment, UE

10. The network element of claim 9, wherein the broadcast message further comprises a voluntary access barring, VAB, timer value; or
wherein the network element comprises one of an eNB (102), a mobility management element, an access network discovery and selection function, or a voluntary access barring server.

11. The network element of claim 9 further comprising control circuitry configured to apply one or more incentives to a user account associated with the UE based on the received total voluntary barring time for at least one allowed application class.

12. A method (400) performed in a network element in a wireless communication system (100), the method comprising:
transmitting (402) a broadcast message indicating that application specific congestion control for data communication, ACDC, is active for communications with the network element the broadcast message including an indication of at least one allowed application class; and **characterized in that**:
the broadcast message further comprises an indication that voluntary access barring is enabled; and receiving (404) an indication of total voluntary barring time for at least one allowed application class from a user equipment, UE.

13. The method (400) of claim 12, further comprising
applying (406) one or more incentives to a user account associated with the UE based on the received total voluntary barring time for at least one allowed application class; or
wherein the network element comprises one of an eNB (102), a mobility management element, an access network discovery and selection function, or a voluntary access barring server.

14. A computer readable medium comprising computer program instructions that when executed on a processor cause the method of any of claims 6, 7, 12 or 13 to be performed.

## Patentansprüche

1. Benutzerausrüstung (104), UE, zur Verwendung in einem drahtlosen Kommunikationssystem (100), die Benutzerausrüstung (104) umfassend:
ein Kommunikationsmodul (565), konfiguriert zum Erlangen einer Angabe einer Aktivierung einer anwendungsspezifischen Überlastungssteuerung für Datenkommunikation, ACDC, die Angabe der ACDC-Aktivierung enthaltend:
eine Angabe mindestens einer zulässigen Anwendungsklasse; und **dadurch gekennzeichnet, dass** die Angabe der ACDC-Aktivierung ferner enthält:
eine Angabe, dass eine freiwillige Zugangssperre, VAB, in dem drahtlosen Kommunikationssystem (100) freigegeben ist;
und die Benutzerausrüstung (104) ferner umfassend eine Steuerlogik (535), konfiguriert zum:
als Reaktion auf Empfangen der Angabe, dass die VAB freigegeben ist, einer freiwilligen Zugangssperre basierend auf einer Angabe von einem Benutzer der UE für eine Anwendung, die Netzwerkzugang anfordert, wobei die Anwendung mit einer zulässigen Anwendungsklasse assoziiert ist.

2. Benutzerausrüstung (104) nach Anspruch 1, wobei das Kommunikationsmodul (565) ferner konfiguriert ist, einen VAB-Zeitgeberwert zu erlangen, der eine Zeitdauer für eine freiwillige Zugangssperre, aktiv zu sein, spezifiziert; und
wobei die Steuerlogik (535) konfiguriert ist, eine freiwillige Zugangssperrung für eine Anwendungsklasse in Abhängigkeit von einem Ablauf eines Zeitgebers basierend auf dem VAB-Zeitgeberwert zu deaktivieren.

3. Benutzerausrüstung (104) nach Anspruch 1, wobei die Steuerlogik (535) ferner konfiguriert ist, eine Gesamtzeit aufzuzeichnen, die der Zugang freiwillig gesperrt wurde, assoziiert mit jeder Anwendungsklasse;
wobei das Kommunikationsmodul (565) ferner konfiguriert ist, die Gesamtzeit, die der Zugang freiwillig gesperrt wurde, assoziiert mit jeder Anwendungsklasse, an ein Netzwerkelement in dem Kernnetzwerk, das vorgesehen ist, derartige Informationen zu empfangen, zu kommunizieren; und wahlweise
wobei das Netzwerkelement eines eines eNB (102), eines Mobilitätsverwaltungselements, einer Zugangsnetzwerkentdeckungs- und -auswahlfunktion oder eines freiwilligen Zugangs sperrenden Servers umfasst.

4. Benutzerausrüstung (104) nach Anspruch 1, wobei die Steuerlogik (535) ferner konfiguriert ist, eine Angabe von einem Benutzer der UE (104) zu erlangen, dass freiwillige Zugangssperrung für die mit einer zulässigen Anwendungsklasse assoziierte Anwendung angewandt werden sollte; und
wobei die Steuerlogik (535) ferner konfiguriert ist, einem Benutzer einen oder mehrere verfügbare Anreize im Gegenzug für die Anwendung freiwilliger Zugangssperrung für die mit einer zulässigen Anwendungsklasse assoziierten Anwendung anzugeben.

5. Benutzerausrüstung (104) nach einem der Ansprüche 1 bis 4,
ferner umfassend eines oder mehrere von: ein Bildschirm, ein Lautsprecher, ein Berührungsbildschirm, eine Tastatur, eine Antennenanordnung, enthaltend eine Vielzahl von Antennen, ein Grafikprozessor oder ein Anwendungsprozessor.

6. Verfahren (200), bewirkt durch eine UE, zum Abschwächen von Überlastung in einem drahtlosen Kommunikationsnetzwerk, das Verfahren umfassend:
als Reaktion auf eine Anwendung, die einen Netzwerkzugang anfordert (204), Bestimmen, dass eine anwendungsspezifische Überlastungssteuerung für Datenkommunikation, ACDC, aktiviert ist, und Bestimmen mindestens einer zulässigen Anwendungsklasse; und **gekennzeichnet durch**:
Empfangen einer Angabe, dass freiwillige Zugangssperrung, VAB, in dem Netzwerk freigegeben ist,
als Reaktion auf Empfangen der Angabe, dass VAB freigegeben ist, freiwilliges Sperren von Zugang (208) basierend auf einer Angabe von einem Benutzer für eine Anwendung, die Netzwerkzugang anfordert, wobei die Anwendung mit einer zulässigen Anwendungsklasse assoziiert ist.

7. Verfahren (200) nach Anspruch 6, ferner umfassend:
Aufzeichnen (210) einer Gesamtzeit, für die Zugang für mit der zulässigen Anwendungsklasse assoziierte Anwendungen freiwillig gesperrt wurde.

8. Verfahren (200) nach Anspruch 7, ferner umfassend Kommunizieren einer Gesamtzeit, für die Zugang freiwillig gesperrt wurde, assoziiert mit jeder Anwendungsklasse, an ein Netzwerkelement in dem Kernnetzwerk, das vorgesehen ist, derartige Informationen zu empfangen; und
wobei das Netzwerkelement eines eines eNB (102), eines Mobilitätsverwaltungselements, einer Zugangsnetzwerkentdeckungs- und -auswahlfunktion oder eines freiwilligen Zugangs sperrenden Servers umfasst.

9. Netzwerkelement zur Verwendung in einem drahtlosen Kommunikationssystem (100), das Netzwerkelement umfassend:
ein Kommunikationsmodul, konfiguriert zum Übertragen einer Rundsendungsnachricht, die angibt, dass eine anwendungsspezifische Überlastungssteuerung für Datenkommunikation, ACDC, für Kommunikationen mit dem Netzwerkelement aktiv ist, wobei die Rundsendungsnachricht eine Angabe mindestens einer zulässigen Anwendungsklasse enthält; und **dadurch gekennzeichnet, dass**
die Rundsendungsnachricht ferner eine Angabe umfasst, dass freiwillige Zugangssperrung freigegeben ist; und wobei das Kommunikationsmodul ferner konfiguriert ist, eine Angabe einer Gesamtzeit freiwilliger Sperrung für mindestens eine zulässige Anwendungsklasse von einer Benutzerausrüstung, UE, zu empfangen.

10. Netzwerkelement nach Anspruch 9, wobei die Rundsendungsnachricht ferner einen Zeitgeberwert einer freiwilligen Zugangssperrung, VAB, umfasst; oder
wobei das Netzwerkelement eines eines eNB (102), eines Mobilitätsverwaltungselements, einer Zugangsnetzwerkentdeckungs- und -auswahlfunktion oder eines freiwilligen Zugangs sperrenden Servers umfasst.

11. Netzwerkelement nach Anspruch 9, ferner umfassend Steuerschaltungen, konfiguriert zum Anwenden eines oder mehrerer Anreize auf ein mit der UE assoziiertes Benutzerkonto basierend auf der empfangenen Gesamtzeit freiwilliger Sperrung für mindestens eine zulässige Anwendungsklasse.

12. Verfahren (400), durchgeführt in einem Netzwerkelement in einem drahtlosen Kommunikationssystem (100), das Verfahren umfassend:
Übertragen (402) einer Rundsendungsnachricht, die angibt, dass eine anwendungsspezifische Überlastungssteuerung für Datenkommunikation, ACDC, für Kommunikationen mit dem Netzwerkelement aktiv ist, wobei die Rundsendungsnachricht eine Angabe für mindestens eine zulässige Anwendungsklasse enthält; und **dadurch gekennzeichnet, dass**:
die Rundsendungsnachricht ferner eine Angabe umfasst, dass eine freiwillige Zugangssperrung freigegeben ist; und Empfangen (404) einer Angabe einer Gesamtzeit freiwilliger Sperrung für mindestens eine zulässige Anwendungsklasse von einer Benutzerausrüstung, UE.

13. Verfahren (400) nach Anspruch 12, ferner umfassend
Anwenden (406) eines oder mehrerer Anreize auf ein mit der UE assoziiertes Benutzerkonto basierend auf der empfangenen Gesamtzeit freiwilliger Sperrung für mindestens eine zulässige Anwendungsklasse; oder
wobei das Netzwerkelement eines eines eNB (102), eines Mobilitätsverwaltungselements, einer Zugangsnetzwerkentdeckungs- und -auswahlfunktion oder eines freiwilligen Zugangs sperrenden Servers umfasst.

14. Computerlesbares Medium, umfassend Computerprogrammanweisungen, die, wenn sie in einem Prozessor ausgeführt werden, bewirken, dass das Verfahren nach einem der Ansprüche 6, 7, 12 oder 13 durchgeführt wird.

## Revendications

1. Équipement utilisateur (104), noté UE, destiné à être utilisé dans un système de communication sans fil (100), l'équipement utilisateur (104) comprenant :
un module de communication (565) configuré pour obtenir une indication d'activation d'un contrôle d'encombrement propre à des applications pour une communication de données, noté ACDC, l'indication d'activation d'un ACDC comportant :
une indication d'au moins une classe d'applications autorisées ; et
**caractérisé en ce que** l'indication d'activation d'un ACDC comporte en outre :
une indication qu'une interdiction volontaire d'accès, notée VAB, est habilitée dans le système de communication sans fil (100) ;
et l'équipement utilisateur (104) comprend en outre une logique de commande (535) configurée pour :
en réponse à la réception de l'indication qu'une VAB est habilitée, interdire volontairement l'accès sur la base d'une indication en provenance d'un utilisateur de l'UE pour une application requérant un accès réseau, l'application étant associée à une classe d'applications autorisées.

2. Équipement utilisateur (104) selon la revendication 1, dans lequel le module de communication (565) est configuré en outre pour obtenir une valeur de temporisateur de VAB qui stipule une longueur de temps pendant laquelle une interdiction volontaire d'accès doit rester active ; et
dans lequel la logique de commande (535) est configurée pour désactiver une interdiction volontaire d'accès pour une classe d'applications en fonction de l'expiration d'un temporisateur sur la base de la valeur de temporisateur de VAB.

3. Équipement utilisateur (104) selon la revendication 1, dans lequel la logique de commande (535) est configurée en outre pour consigner un temps total pendant lequel l'accès a été volontairement interdit, associé à chaque classe d'applications ;
dans lequel le module de communication (565) est configuré en outre pour communiquer le temps total pendant lequel l'accès a été volontairement interdit, associé à chaque classe d'applications, à un élément de réseau dans le cœur de réseau qui est désigné pour recevoir de telles informations ; et, éventuellement,
dans lequel l'élément de réseau comprend soit un eNB (102), soit un élément de gestion de la mobilité, soit une fonction de découverte et de sélection de réseau d'accès, soit un serveur d'interdiction volontaire d'accès.

4. Équipement utilisateur (104) selon la revendication 1, dans lequel la logique de commande (535) est configurée en outre pour obtenir une indication en provenance d'un utilisateur de l'UE (104) qu'il convient d'appliquer une interdiction volontaire d'accès pour l'application associée à une classe d'applications autorisées ; et
dans lequel la logique de commande (535) est configurée en outre pour indiquer à un utilisateur un ou plusieurs incitatifs disponibles en échange de l'application d'une interdiction volontaire d'accès pour l'application associée à une classe d'applications autorisées.

5. Équipement utilisateur (104) selon l'une quelconque des revendications 1 à 4, comprenant en outre un ou plusieurs éléments dans le groupe constitué par : un écran, un haut-parleur, un écran tactile, un clavier, un réseau d'antennes comportant une pluralité d'antennes, un processeur graphique ou un processeur d'applications.

6. Procédé (200), effectué par un UE, d'atténuation de l'encombrement dans un réseau de communication sans fil, le procédé comprenant :
en réponse à la requête (204) d'un accès réseau par une application, la détermination qu'un contrôle d'encombrement propre à des applications pour une communication de données, noté ACDC, est activé et la détermination d'au moins une classe d'applications autorisées ; et **caractérisé par** :
la réception d'une indication qu'une interdiction volontaire d'accès, notée VAB, est habilitée dans le réseau ;
en réponse à la réception de l'indication qu'une VAB est habilitée, l'interdiction volontaire de l'accès (208) sur la base d'une indication en provenance d'un utilisateur pour une application requérant un accès réseau, l'application étant associée à une classe d'applications autorisées.

7. Procédé (200) selon la revendication 6, comprenant en outre :
la consignation (210) d'un temps total pendant lequel l'accès a été volontairement interdit pour des applications associées à chaque classe d'applications autorisées.

8. Procédé (200) selon la revendication 7, comprenant en outre la communication d'un temps total pendant lequel l'accès a été volontairement interdit, associé à chaque classe d'applications, à un élément de réseau dans le cœur de réseau qui est désigné pour recevoir de telles informations ; et
dans lequel l'élément de réseau comprend soit un eNB (102), soit un élément de gestion de la mobilité, soit une fonction de découverte et de sélection de réseau d'accès, soit un serveur d'interdiction volontaire d'accès.

9. Élément de réseau destiné à être utilisé dans un système de communication sans fil (100), l'élément de réseau comprenant :
un module de communication configuré pour transmettre un message de diffusion indiquant qu'un contrôle d'encombrement propre à des applications pour une communication de données, noté ACDC, est actif pour des communications avec l'élément de réseau, le message de diffusion comportant une indication d'au moins une classe d'applications autorisées ; et **caractérisé en ce que**
le message de diffusion comprend en outre une indication qu'une interdiction volontaire d'accès est habilitée ; et le module de communication étant configuré en outre pour recevoir une indication d'un temps total d'interdiction volontaire pour au moins une classe d'applications autorisées en provenance d'un équipement utilisateur, noté UE.

10. Élément de réseau selon la revendication 9, dans lequel le message de diffusion comprend en outre une valeur de temporisateur d'une interdiction volontaire d'accès, notée VAB ; ou
lequel élément de réseau comprend soit un eNB (102), soit un élément de gestion de la mobilité, soit une fonction de découverte et de sélection de réseau d'accès, soit un serveur d'interdiction volontaire d'accès.

11. Élément de réseau selon la revendication 9, comprenant en outre une circuiterie de commande configurée pour appliquer un ou plusieurs incitatifs à un compte utilisateur associé à l'UE sur la base du temps total d'une interdiction volontaire reçu pour au moins une classe d'applications autorisées.

12. Procédé (400), réalisé dans un élément de réseau dans un système de communication sans fil (100), le procédé comprenant :
la transmission (402) d'un message de diffusion indiquant qu'un contrôle d'encombrement propre à des applications pour une communication de données, noté ACDC, est actif pour des communications avec l'élément de réseau, le message de diffusion comportant une indication d'au moins une classe d'applications autorisées ; et **caractérisé en ce que**
le message de diffusion comprend en outre une indication qu'une interdiction volontaire d'accès est habilitée ; et la réception (404) d'une indication d'un temps total d'interdiction volontaire pour au moins une classe d'applications autorisées en provenance d'un équipement utilisateur, noté UE.

13. Procédé (400) selon la revendication 12, comprenant en outre :
l'application (406) d'un ou de plusieurs incitatifs à un compte utilisateur associé à l'UE sur la base du temps total d'une interdiction volontaire reçu pour au moins une classe d'applications autorisées ; ou
dans lequel l'élément de réseau comprend soit un eNB (102), soit un élément de gestion de la mobilité, soit une fonction de découverte et de sélection de réseau d'accès, soit un serveur d'interdiction volontaire d'accès.

14. Support lisible par ordinateur comprenant des instructions de programme d'ordinateur qui, lorsqu'elles sont exécutées sur un processeur, entraînent la réalisation du procédé selon l'une quelconque des revendications 6, 7, 12 ou 13.
